# FASCICULE DE BREVET EUROPEEN

(11) **EP 3 478 978 B1**
(45) Date de publication et mention de la délivrance du brevet: **03.08.2022**
(21) Numéro de dépôt: 17745401.4
(22) Date de dépôt: 27.06.2017
(51) Int. Cl.: F16D 1/076, F01L 1/047

(54) **DISPOSITIF D'ACCOUPLEMENT EN ROTATION ENTRE UN VOLANT MOTEUR ET UN VILEBREQUIN**
VORRICHTUNG ZUR BEREITSTELLUNG EINER DREHKUPPLUNG ZWISCHEN EINEM MOTORSCHWUNGRAD UND EINER KURBELWELLE
DEVICE PROVIDING ROTATIONAL COUPLING BETWEEN AN ENGINE FLYWHEEL AND A CRANKSHAFT

(30) Priorité: 30.06.2016 FR 1656227
(43) Date de publication de la demande: 08.05.2019
(73) Titulaire: Renault s.a.s, 92100 Boulogne Billancourt (FR)
(72) Inventeur: MILLON, Jean-Pierre, 78870 Bailly (FR)
(74) Mandataire: Renault Group
(86) Numéro de dépôt international: PCT/FR2017/051719
(87) Numéro de publication internationale: WO 2018/002513

(56) Documents cités:
- EP-A1- 2 308 708
- WO-A1-2015/163574
- FR-A1- 2 604 229
- FR-A1- 2 734 618
- FR-A1- 2 782 354
- US-A1- 2010 079 018

## Description

L'invention se rapporte au domaine des transports et plus particulièrement des applications comportant un moteur à combustion interne avec un système de bielle et de manivelle. Elle trouve une application avantageuse sous la forme d'un dispositif d'accouplement en rotation entre un volant moteur et un vilebrequin permettant d'accueillir un roulement côté accouplement au volant moteur dans un véhicule automobile équipé d'un tel dispositif de motorisation.

Les moteurs à combustion interne installés dans le compartiment moteur d'un véhicule automobile comprennent de façon connue un vilebrequin relié à des bielles dans un carter-cylindres installé au-dessus d'un carter d'huile. Le vilebrequin tourne sur des paliers réalisés dans un bloc moteur, il est monté mobile en rotation autour d'un axe longitudinal horizontal et relié à des pistons coulissant dans un mouvement de va-et-vient dans des cylindres d'axes sensiblement vertical installés dans le carter-cylindres. Le vilebrequin comporte une alternance des motifs élémentaires suivants : bras, maneton et tourillon. Le maneton assure la liaison pivot avec la bielle et reçoit la poussée du piston, et une excentration du maneton permet la transformation du mouvement de translation en un mouvement de rotation du vilebrequin autour des axes coaxiaux tourillonnant dans des paliers correspondants du bloc moteur. Les « bras de manivelle », désignés également par les termes bras ou flasque sont des liaisons entre les manetons et les tourillons, et les bras peuvent recevoir des masses d'équilibrage. Le vilebrequin est soumis à des efforts en torsion et en flexion générant notamment des frottements et des vibrations. Pour réduire la consommation on cherche donc à réduire ces frottements notamment au moyen de roulements autour des tourillons qui frottent sur les paliers fixes du bloc moteur, sachant qu'un seul ajout d'un tel roulement sur le tourillon situé à l'extrémité du vilebrequin du côté du volant moteur, c'est-à-dire côté accouplement, réduit déjà les frottements de façon notable et particulièrement quand le moteur est froid. A une extrémité du vilebrequin est fixé solidaire un volant moteur disposé à l'extérieur du carter cylindres. La paroi du carter-cylindres présente donc un orifice circulaire traversé par l'extrémité du vilebrequin fixée au volant moteur, l'étanchéité se faisant au moyen d'une bague. De manière connue le vilebrequin comporte une extrémité axiale débouchant à l'extérieur de la chambre par ledit orifice. Le brevet FR2756895 divulgue un tel mode de fixation du vilebrequin au volant moteur par un plateau situé à l'extrémité du vilebrequin côté accouplement.

Un inconvénient de ce système est qu'il empêche de positionner un roulement à palier monobloc sur le dernier tourillon. En effet, le plateau est de diamètre supérieur au dernier tourillon côté accouplement, ce qui nécessite un palier en deux parties pour insérer un roulement autour de ce dernier tourillon côté accouplement. Or, les paliers en deux parties, c'est-à-dire coupés à l'axe, occasionnent des problèmes de bruyance. Une solution consiste à augmenter le diamètre du dernier tourillon pour le rendre égal à celui du plateau mais en termes de poids et d'encombrement cette solution n'est pas profitable.

Le document US 2010/079018 A1 divulgue un ensemble vilebrequin / volant d'inertie directement relié l'un à l'autre, dans lequel un palier supporte le volant d'inertie. Le document EP 2 308 708 A1 divulgue un ensemble similaire dans lequel les roulements sont montés sur le vilebrequin loin des extrémités du vilebrequin.

Un des buts de l'invention est de remédier à au moins une partie des inconvénients de la technique antérieure en fournissant un dispositif d'accouplement en rotation entre un volant moteur et un vilebrequin de moteur à combustion interne, ce dispositif de passage de couple étant apte à recevoir un roulement permettant de réduire les frottements.

A cette fin, l'invention propose ensemble vilebrequin et volant moteur selon la revendication 1.

Grâce à l'invention, la pièce de jonction permet l'insertion d'un roulement à palier monobloc non bruyant et l'accouplement entre la pièce de jonction et le vilebrequin est assuré par des sculptures en relief complémentaires entre elles et dont l'aspect saillant peut être rendu par des formes diverses de type cannelure, nervure, denture, moulure ou autre pion.

Avantageusement, l'extrémité du vilebrequin du côté du volant moteur appartient à un bras ou à un tourillon dudit vilebrequin, autorisant alors le positionnement d'un roulement à palier monobloc à l'extrémité du vilebrequin côté accouplement.

Selon une autre caractéristique avantageuse, l'extrémité du vilebrequin du côté du volant moteur et ladite pièce de jonction s'enveloppent partiellement l'une l'autre. Cette architecture permet un positionnement plus aisé des pièces facilite le montage.

Selon une autre caractéristique avantageuse, des premières sculptures sont positionnées sur une surface verticale de ladite pièce de jonction, ladite surface de la pièce de jonction étant située du côté du vilebrequin et venant au contact dudit vilebrequin une fois le dispositif assemblé. Cette caractéristique permet la formation d'une partie des moyens d'accouplement entre la pièce de jonction et le vilebrequin.

Selon une autre caractéristique avantageuse, des secondes sculptures sont positionnées sur une surface verticale dudit vilebrequin, ladite surface du vilebrequin étant située à l'extrémité dudit vilebrequin du côté du volant moteur et venant au contact de ladite pièce de jonction une fois le dispositif assemblé. Cette caractéristique permet la formation de l'autre partie des moyens d'accouplement entre le vilebrequin et la pièce de jonction.

Avantageusement, les sculptures sont des cannelures radiales perpendiculaires à l'axe dudit vilebrequin. L'avantage de ce mode de réalisation est qu'il permet la solidarisation par accouplement des pièces et leur entrainement mutuel dynamique.

Selon une autre caractéristique avantageuse, lesdites sont réalisées par forgeage, frittage ou usinage, ce qui permet une facilité de réalisation.

Selon une autre caractéristique avantageuse, ladite pièce de jonction comporte un alésage d'allégement apte à accueillir une vis de maintien axial de ladite pièce de jonction audit vilebrequin. Cette caractéristique permet d'empêcher le désaccouplement desdites sculptures par serrage axial tout en allégeant le dispositif.

Selon une autre caractéristique avantageuse, la pièce de jonction et le vilebrequin sont solidarisés entre eux par frettage, ce qui permet d'augmenter le couple transmissible entre le vilebrequin et le volant moteur fixé à la pièce de jonction sans occasionner de déformation sensible puisque le frettage reste local.

Avantageusement, ledit roulement est positionné autour dudit tourillon, ce mode de réalisation permet un assemblage simple.

Selon une dernière caractéristique avantageuse, ledit roulement est fretté axialement sur ledit tourillon, ce qui présente un avantage en termes de durabilité de l'assemblage.

D'autres caractéristiques et avantages apparaîtront à la lecture de la description suivante, donnée uniquement à titre d'exemple non limitatif et faite en référence aux figures dans lesquelles:
- la figure 1 est une vue partielle en coupe axiale d'un vilebrequin muni d'un volant moteur, tel qu'il est connu dans l'art antérieur ;
- la figure 2 est une vue partielle en coupe axiale d'un dispositif d'accouplement en rotation d'un volant moteur à un vilebrequin non conforme à l'invention;
- la figure 3 est une vue partielle en coupe axiale d'un autre mode de réalisation du dispositif d'accouplement en rotation d'un volant moteur à un vilebrequin selon l'invention ; et,
- la figure 4 est une représentation de cannelures dudit dispositif d'accouplement.

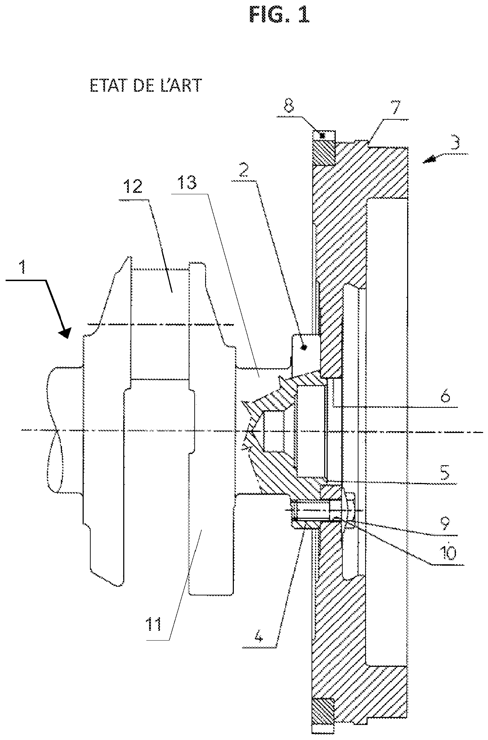

Sur la **figure 1**, est représenté un vilebrequin 1 muni d'un volant moteur 3, tel qu'il est connu dans l'art antérieur. Le vilebrequin 1 comporte une alternance des motifs élémentaires: bras 11, maneton 12 et tourillon 13. L'extrémité du vilebrequin 1 du côté du volant moteur 3, c'est-à-dire côté accouplement se termine après un dernier tourillon 13 par un plateau 2 venant de fonderie avec le vilebrequin 1 et s'étendant perpendiculairement à l'axe de ce dernier. Ce plateau 2 sert au centrage et à l'accouplement en rotation d'un volant moteur 3. Le plateau 2 présente plusieurs taraudages 4 usinés parallèlement à l'axe du vilebrequin 1 et irrégulièrement repartis sur un même diamètre. Ces trous taraudés 4 qui servent à l'assemblage du volant 3 sur le plateau 2 par des vis de fixation 9, sont agencés autour d'un épaulement annulaire 5 en saillie axiale qui est destiné à venir s'emboîter dans un alésage 6 correspondant du volant moteur 3 pour opérer le centrage de ce dernier. Le volant moteur 3 présente classiquement une première couronne dentée 7 destinée à engrener avec le pignon non figuré du démarreur ainsi qu'une seconde couronne dentée 8, qui dans l'exemple illustré est montée frettée à la périphérie du volant 3. Le volant moteur 3 présente par ailleurs, des trous de passage cylindriques 10 pour les vis de fixation 9, ces trous de passage sont usinés axialement autour de l'alésage central 6 de façon à pouvoir être positionné en correspondance avec les taraudages 4. La fixation du volant moteur 3 sur le vilebrequin 1, est donc opérée au moyen de vis 9 identiques traversant les trous de passage 10 du volant 3 et venant se serrer dans les taraudages 4 du plateau 2.

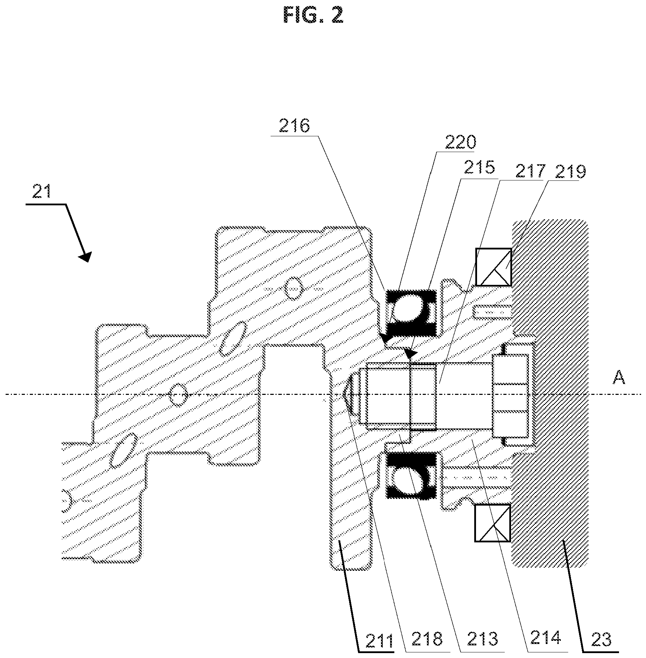

Selon un exemple de réalisation non conforme à l'invention représenté à la **figure 2**, le vilebrequin 21 est fixé au volant moteur 23 par l'intermédiaire d'une pièce de jonction 214 permettant l'installation d'un roulement 216 à palier monobloc côté accouplement, entre la pièce de jonction 214 et le bras 211 situé à l'extrémité du côté du volant moteur 23 du vilebrequin 21. En effet, la pièce de jonction 214 permet de ne pas avoir de plateau à l'extrémité du vilebrequin 21 côté accouplement. Cette pièce de jonction 214 est préférentiellement en fonte ou en acier en fonction du couple et de la puissance à transmettre, ainsi un acier à haute résistance convient particulièrement pour des charges élevées. L'extrémité du vilebrequin 21 est le tourillon 213 qui est inséré dans la pièce de jonction 214, autour de laquelle le roulement 216 à palier monobloc est positionné. Il peut s'agir de tout type de roulement : à billes, à rouleaux coniques ou croisés, ou à aiguilles par exemple. La position de l'interface dont les surfaces de contact comportent les sculptures 215 dépend de l'architecture du vilebrequin 21 et de la pièce de jonction 214, ainsi, dans ce mode de réalisation le dernier tourillon 213 du vilebrequin 21 s'insère dans la pièce de jonction 214 mais dans un autre mode de réalisation, tel que représenté dans la figure suivante, la pièce de jonction 314 est insérée dans le vilebrequin 31. De plus, dans ce mode de réalisation le dernier tourillon 213 du vilebrequin 21 est représenté avec une portée très courte mais une portée plus longue augmentant la surface de recouvrement entre le tourillon 213 et la pièce de jonction 214 est envisageable. La pièce de jonction 214 est creusée de manière à accueillir le dernier tourillon 213 du vilebrequin 21. La surface du vilebrequin 21 en contact avec la surface de la pièce de jonction 214 est donc essentiellement à l'intérieur de la pièce de jonction 214. Cette surface de contact forme une interface de contact, une fois le dispositif assemblé, entre le vilebrequin 21 et la pièce de jonction 214. Le centrage de la pièce de jonction 214 sur le volant moteur 23 est par exemple réalisé sur le diamètre extérieur de la pièce de jonction. Avant d'assembler la pièce de jonction 214 au vilebrequin 21, un roulement 216 à palier monobloc est positionné entre la face extérieure du côté du volant moteur de la pièce de jonction 214 et un bras 211 situé à l'extrémité du côté du volant moteur du vilebrequin 21. Le dimensionnement de ce roulement 216 dépend de l'effort développé lors de la combustion ainsi que des caractéristiques dynamiques du vilebrequin 21. Préférentiellement, tel qu'illustré sur la figure, le roulement 216 est plus particulièrement positionné autour du dernier tourillon 213 à l'extrémité du vilebrequin 21 côté accouplement. Le roulement 216 est disposé entre deux épaulements (non représentés). Ce roulement 216 est préférentiellement fretté axialement mais il est aussi maintenable en entretoise avec vis. Enfin, une bague d'étanchéité 219 est positionnée sur le périmètre extérieur de la pièce de jonction 214. Cette bague d'étanchéité 219 n'est pas nécessaire si une étanchéité est intégrée au roulement 216. La pièce de jonction 214 comporte un alésage 217 d'allègement débouchant traversant, se prolongeant dans le vilebrequin 21, cet alésage 217 d'allègement accueillant une vis 218 centrale de maintien axial de la pièce de jonction 214 au vilebrequin 21. De manière complémentaire ou alternative à la vis 218 centrale de maintien, la pièce de jonction 214 et le vilebrequin 21 sont solidarisés entre eux par frettage. Ici un frettage radial est réalisé et la vis 218 centrale sont combinés. Le centrage de la pièce de jonction 214 dans le vilebrequin 21 est réalisé sur le diamètre intérieur de la surface circulaire d'interface. Les surfaces verticales d'interface de contact sont ici circulaires et annulaires pour des raisons de simplicité de fabrication. L'accouplement en rotation est réalisé au moyen de sculptures en relief 215 positionnées sur des surfaces radiales, c'est-à-dire partant de l'axe A du vilebrequin 21 vers l'extérieur, ces surfaces sont perpendiculaires à l'axe A du vilebrequin 21 et appartiennent à l'interface de contact entre la pièce de jonction 214 et l'extrémité du vilebrequin 21. Les sculptures 215 en relief sur chacune desdites surfaces sont complémentaires de manière à être aptes à s'entrainer mutuellement par coopération entre elles. Les premières sculptures sont positionnées sur une surface verticale de la paroi de la pièce de jonction 214, cette surface verticale externe étant orientée du côté du vilebrequin 21 et venant au contact du vilebrequin 21 une fois le dispositif assemblé. De la même manière les secondes sculptures sont positionnées sur une surface verticale externe dudit vilebrequin 21 située du côté du volant moteur 23, orientée vers la pièce de jonction 214 et venant au contact de la pièce de jonction 214 une fois le dispositif assemblé. Les premières et secondes sculptures sont complémentaires de manière à être aptes à coopérer entre elles en s'emboîtant. La complémentarité entre ces structures permet ainsi au vilebrequin et à la pièce de jonction de s'entraîner l'une l'autre. Les structures en relief utilisées par les moyens d'accouplement sont préférentiellement des cannelures radiales perpendiculaires à l'axe A du vilebrequin 21. Les cannelures 215 sont ici positionnées sur la surface verticale annulaire périphérique intérieure de l'interface de contact, autour de l'alésage destiné à recevoir l'alésage d'alésage 217 d'allègement et la vis 218 centrale mais ces cannelures sont aussi positionnables sur la surface 220 verticale annulaire périphérique extérieure de l'interface de contact. Pour résumer, ce mode de réalisation du dispositif d'accouplement en rotation du volant moteur 23 au vilebrequin 21 permettant l'intégration d'un roulement 216 sur le dernier tourillon 213 à l'extrémité du vilebrequin 21 côté accouplement transfère le couple entre le vilebrequin 21 et la pièce de jonction 214 au moyen de cannelures 215 radiales positionnées sur des surfaces verticales, perpendiculaires à l'axe A du vilebrequin, de l'interface de contact entre le vilebrequin 21 et la pièce de jonction 214. La liaison entre le vilebrequin 21 et la pièce de jonction 214 est assurée par serrage axial de ces deux pièces au moyen d'une vis 218 centrale ainsi que par un serrage radial complémentaire ou alternatif par frettage.

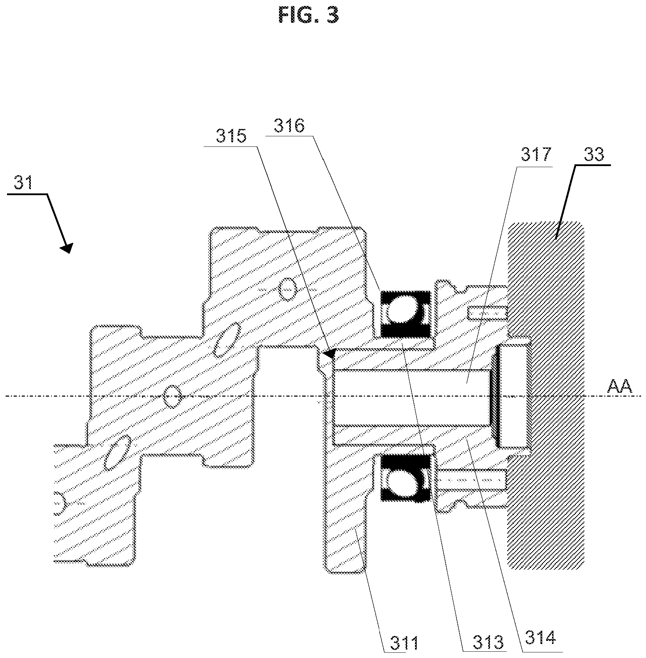

Selon l'invention représenté à la **figure 3****,** le vilebrequin 31 est fixé au volant moteur 33 par l'intermédiaire d'une pièce de jonction 314 permettant l'installation d'un roulement 316 à palier monobloc autour du dernier tourillon 313 côté accouplement. Le dernier tourillon 313 du vilebrequin 31 supporte le roulement 316 et est creusé de manière à permettre l'insertion de la pièce de jonction 314. Le dernier tourillon 313 à l'extrémité du vilebrequin 31 est donc creusé de manière à accueillir une protubérance de la pièce de jonction 314. La surface du vilebrequin 31 en contact avec la surface de la pièce de jonction 314 est donc essentiellement à l'intérieur du vilebrequin 31. Cette surface de contact forme une interface de contact, une fois le dispositif assemblé, entre le vilebrequin 31 et la pièce de jonction 314. La pièce de jonction 314 comporte un alésage 317 d'allégement traversant débouchant, mais un alésage non débouchant est aussi concevable. Dans ce mode alternatif de réalisation la pièce de jonction 314 ne débouche pas sur l'extrémité du bras 311 mais cela est envisageable en disposant un bouchon dans l'alésage 317 d'allégement pour l'obturer et éviter que l'huile ne pénètre à l'intérieur. Les cannelures 315 sont disposées radialement sur les surfaces verticales de l'interface de contact entre le vilebrequin 31 et la pièce de jonction 314, perpendiculairement à l'axe AA du vilebrequin 31. Ce mode de réalisation alternatif ne comportant pas de vis centrale, la liaison entre le vilebrequin 31 et la pièce de jonction 314 est assurée au moyen d'un serrage radial par frettage. Une bague d'étanchéité (non représentée) est positionnée sur le périmètre extérieur de la pièce de jonction 214.

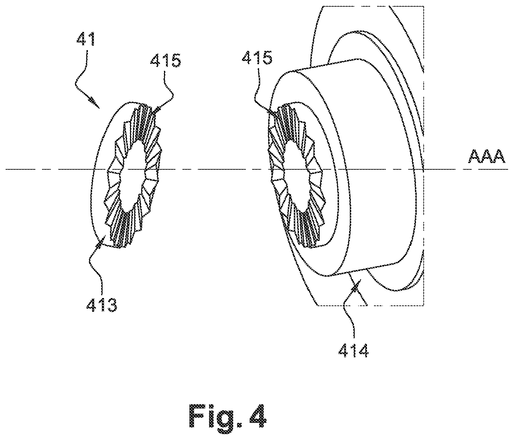

La **figure 4** représente les sculptures 415 en relief portées par les surfaces de contact perpendiculaires à l'axe AAA du vilebrequin 41, ces surfaces appartenant d'une part au dernier tourillon 413 du vilebrequin 41 et à la pièce de jonction 414. Ces sculptures 415 participent à la solidarisation dynamique de cet accouplement de pièces en mouvement que sont le vilebrequin 41 et la pièce de jonction 414 et permettent leur entrainement mutuel. Les sculptures 415 sont réalisées par forgeage ou usinage dans le vilebrequin 41 et par forgeage, frittage ou usinage dans la pièce de jonction 414. L'aspect saillant des sculptures 415 en relief est rendu par des formes diverses de type cannelure, nervure, denture, moulure ou autre pion.

## Revendications

1. Ensemble vilebrequin et volant moteur comprenant un dispositif d'accouplement d'un volant moteur (23, 33) accouplé en rotation à un vilebrequin (21, 31, 41) de moteur à combustion interne, **caractérisé en ce qu'**il comporte une pièce de jonction (214, 314) entre le volant moteur (23, 33) et l'extrémité dudit vilebrequin (21, 31, 41) du côté du volant moteur (23, 33), dont l'assemblage comporte une surface lisse, entre ladite pièce de jonction (214, 314, 414) et un bras (211, 311) du vilebrequin (21, 31, 41) situé à l'extrémité dudit vilebrequin (21, 31, 41) du côté du volant moteur (23, 33), apte à recevoir un roulement (216, 316) à palier monobloc sur un dernier tourillon (213, 313, 413) à l'extrémité du vilebrequin (21, 31, 41) côté accouplement, les surfaces de contact sur ladite pièce de jonction (214, 314, 414) et ladite extrémité dudit vilebrequin (21, 31, 41) comportant des sculptures (215, 315, 415) en relief positionnées perpendiculairement à l'axe dudit vilebrequin (21, 31, 41), lesdites sculptures (215, 315, 415) sur chacune desdites surfaces étant complémentaires de manière à être aptes à s'entrainer mutuellement par coopération entre elles.

2. Ensemble vilebrequin et volant moteur comprenant un dispositif d'accouplement d'un volant moteur (23, 33) accouplé en rotation à un vilebrequin (21, 31, 41) selon la revendication précédente, **caractérisé en ce que** ladite extrémité du vilebrequin (21, 31, 41) du côté du volant moteur (23, 33) appartient à un bras (211, 311) ou à un tourillon (213, 313, 413) dudit vilebrequin (21, 31, 41).

3. Ensemble vilebrequin et volant moteur comprenant un dispositif d'accouplement d'un volant moteur (23, 33) accouplé en rotation à un vilebrequin (21, 31, 41) selon l'une quelconque des revendications précédentes, **caractérisé en ce que** ladite extrémité du vilebrequin (21, 31, 41) du côté du volant moteur (23, 33) et ladite pièce de jonction (214, 314, 414) s'enveloppent partiellement l'une l'autre.

4. Ensemble vilebrequin et volant moteur comprenant un dispositif d'accouplement d'un volant moteur (23, 33) accouplé en rotation à un vilebrequin (21, 31, 41) selon l'une quelconque des revendications précédentes, **caractérisé en ce que** des premières sculptures (215, 315, 415) sont positionnées sur une surface verticale de ladite pièce de jonction (214, 314, 414), ladite surface de la pièce de jonction étant située du côté du vilebrequin (21, 31, 41) et venant au contact dudit vilebrequin (21, 31, 41) une fois le dispositif assemblé.

5. Ensemble vilebrequin et volant moteur comprenant un dispositif d'accouplement d'un volant moteur (23, 33) accouplé en rotation à un vilebrequin (21, 31, 41) selon l'une quelconque des revendications précédentes, **caractérisé en ce que** des secondes sculptures (215, 315, 415) sont positionnées sur une surface verticale dudit vilebrequin (21, 31, 41), ladite surface du vilebrequin (21, 31, 41) étant située à l'extrémité dudit vilebrequin (21, 31, 41) du côté du volant moteur (23, 33) et venant au contact de ladite pièce de jonction (214, 314, 414) une fois le dispositif assemblé.

6. Ensemble vilebrequin et volant moteur comprenant un dispositif d'accouplement d'un volant moteur (23, 33) accouplé en rotation à un vilebrequin (21, 31, 41) selon l'une quelconque des revendications précédentes, **caractérisé en ce que** les sculptures (215, 315, 415) sont des cannelures radiales perpendiculaires à l'axe (A, AA, AAA) dudit vilebrequin (21, 31, 41).

7. Ensemble vilebrequin et volant moteur comprenant un dispositif d'accouplement d'un volant moteur (23, 33) accouplé en rotation à un vilebrequin (21, 31, 41) selon l'une quelconque des revendications précédentes, **caractérisé en ce que** lesdites sculptures (215, 315, 415) sont réalisées par forgeage, frittage ou usinage.

8. Ensemble vilebrequin et volant moteur comprenant un dispositif d'accouplement d'un volant moteur (23) accouplé en rotation à un vilebrequin (21) selon l'une quelconque des revendications précédentes, **caractérisé en ce que** ladite pièce de jonction (214) comporte un alésage (217) d'allégement apte à accueillir une vis (218) de maintien axial de ladite pièce de jonction (214) audit vilebrequin (21).

9. Ensemble vilebrequin et volant moteur comprenant un dispositif d'accouplement d'un volant moteur (23, 33) accouplé en rotation à un vilebrequin (21, 31, 41) selon l'une quelconque des revendications précédentes, **caractérisé en ce que** la pièce de jonction (213, 314, 414) et le vilebrequin (21, 31, 41) sont solidarisés entre eux par frettage.

10. Ensemble vilebrequin et volant moteur comprenant un dispositif d'accouplement d'un volant moteur (33) accouplé en rotation à un vilebrequin (31) selon l'une quelconque des revendications 2 à 9, **caractérisé en ce que** ledit roulement (316) est positionné autour dudit tourillon (313).

11. Ensemble vilebrequin et volant moteur comprenant un dispositif d'accouplement d'un volant moteur (33) accouplé en rotation à un vilebrequin (31) selon la revendication précédente, **caractérisé en ce que** ledit roulement (316) est fretté axialement sur ledit tourillon (313).

## Patentansprüche

1. Anordnung aus Kurbelwelle und Motorschwungrad, welche eine Kupplungsvorrichtung eines Motorschwungrades (23, 33) umfasst, das mit einer Kurbelwelle (21, 31, 41) einer Brennkraftmaschine drehgekoppelt ist, **dadurch gekennzeichnet, dass** sie ein Verbindungsteil (214, 314) zwischen dem Motorschwungrad (23, 33) und dem Ende der Kurbelwelle (21, 31, 41) auf der Seite des Motorschwungrades (23, 33) umfasst, deren Zusammenbau eine glatte Fläche zwischen dem Verbindungsteil (214, 314, 414) und einem Arm (211, 311) der Kurbelwelle (21, 31, 41), der sich an dem Ende der Kurbelwelle (21, 31, 41) auf der Seite des Motorschwungrades (23, 33) befindet, aufweist, die geeignet ist, ein einteiliges Wälzlager (216, 316) auf einem letzten Lagerzapfen (213, 313, 413) am Ende der Kurbelwelle (21, 31, 41) auf der Kopplungsseite aufzunehmen, wobei die Kontaktflächen auf dem Verbindungsteil (214, 314, 414) und dem Ende der Kurbelwelle (21, 31, 41) erhabene Profilelemente (215, 315, 415) aufweisen, die senkrecht zur Achse der Kurbelwelle (21, 31, 41) positioniert sind, wobei die Profilelemente (215, 315, 415) auf jeder der Flächen komplementär sind, so dass sie geeignet sind, sich durch Zusammenwirken zwischen ihnen gegenseitig anzutreiben.

2. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach dem vorhergehenden Anspruch, **dadurch gekennzeichnet, dass** das Ende der Kurbelwelle (21, 31, 41) auf der Seite des Motorschwungrades (23, 33) zu einem Arm (211, 311) oder einem Lagerzapfen (213, 313, 413) der Kurbelwelle (21, 31, 41) gehört.

3. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach einem der vorhergehenden Ansprüche, **dadurch gekennzeichnet, dass** das Ende der Kurbelwelle (21, 31, 41) auf der Seite des Motorschwungrades (23, 33) und das Verbindungsteil (214, 314, 414) einander teilweise umgreifen.

4. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach einem der vorhergehenden Ansprüche, **dadurch gekennzeichnet, dass** erste Profilelemente (215, 315, 415) auf einer vertikalen Fläche des Verbindungsteils (214, 314, 414) positioniert sind, wobei sich diese Fläche des Verbindungsteils auf der Seite der Kurbelwelle (21, 31, 41) befindet und mit der Kurbelwelle (21, 31, 41) in Kontakt kommt, wenn die Vorrichtung zusammengebaut ist.

5. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach einem der vorhergehenden Ansprüche, **dadurch gekennzeichnet, dass** zweite Profilelemente (215, 315, 415) auf einer vertikalen Fläche der Kurbelwelle (21, 31, 41) positioniert sind, wobei sich diese Fläche der Kurbelwelle (21, 31, 41) am Ende der Kurbelwelle (21, 31, 41) auf der Seite des Motorschwungrades (23, 33) befindet und mit dem Verbindungsteil (214, 314, 414) in Kontakt kommt, wenn die Vorrichtung zusammengebaut ist.

6. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach einem der vorhergehenden Ansprüche, **dadurch gekennzeichnet, dass** die Profilelemente (215, 315, 415) radiale Rillen sind, die zur Achse (A, AA, AAA) der Kurbelwelle (21, 31, 41) senkrecht sind.

7. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach einem der vorhergehenden Ansprüche, **dadurch gekennzeichnet, dass** die Profilelemente (215, 315, 415) durch Schmieden, Sintern oder spanabhebende Formgebung hergestellt sind.

8. Anordnung aus Kurbelwelle und Motorschwungrad, welche eine Kupplungsvorrichtung eines Motorschwungrades (23) umfasst, das mit einer Kurbelwelle (21) drehgekoppelt ist, nach einem der vorhergehenden Ansprüche, **dadurch gekennzeichnet, dass** das Verbindungsteil (214) eine Erleichterungsbohrung (217) aufweist, die geeignet ist, eine Schraube (218) zum axialen Halten des Verbindungsteils (214) an der Kurbelwelle (21) aufzunehmen.

9. Anordnung aus Kurbelwelle und Motorschwungrad, welche eine Kupplungsvorrichtung eines Motorschwungrades (23, 33) umfasst, das mit einer Kurbelwelle (21, 31, 41) drehgekoppelt ist, nach einem der vorhergehenden Ansprüche, **dadurch gekennzeichnet, dass** das Verbindungsteil (213, 314, 414) und die Kurbelwelle (21, 31, 41) durch Schrumpfpassung fest miteinander verbunden sind.

10. Anordnung aus Kurbelwelle und Motorschwungrad, welche eine Kupplungsvorrichtung eines Motorschwungrades (33) umfasst, das mit einer Kurbelwelle (31) drehgekoppelt ist, nach einem der Ansprüche 2 bis 9, **dadurch gekennzeichnet, dass** das Wälzlager (316) um den Lagerzapfen (313) herum positioniert ist.

11. Anordnung aus Kurbelwelle und Motorschwungrad, welche eine Kupplungsvorrichtung eines Motorschwungrades (33) umfasst, das mit einer Kurbelwelle (31) drehgekoppelt ist, nach dem vorhergehenden Anspruch, **dadurch gekennzeichnet, dass** das Wälzlager (316) axial auf den Lagerzapfen (313) aufgeschrumpft ist.

## Claims

1. Crankshaft and engine flywheel assembly comprising a device for coupling an engine flywheel (23, 33) that is coupled in rotation to a crankshaft (21, 31, 41) of an internal combustion engine, **characterized in that** it comprises a joining part (214, 314) between the engine flywheel (23, 33) and the end of said crankshaft (21, 31, 41) on the side of the engine flywheel (23, 33), whose assemblage comprises a smooth surface, between said joining part (214, 314, 414) and an arm (211, 311) of the crankshaft (21, 31, 41) located at the end of said crankshaft (21, 31, 41) on the side of the engine flywheel (23, 33), that is able to receive a one-piece main bearing rolling element bearing (216, 316) on a last main journal (213, 313, 413) at the end of the crankshaft (21, 31, 41) on the coupling side, the contact surfaces on said joining part (214, 314, 414) and said end of said crankshaft (21, 31, 41) comprising raised features (215, 315, 415) positioned perpendicular to the axis of said crankshaft (21, 31, 41), said features (215, 315, 415) on each of said surfaces being complementary so as to be able to drive each other by mutual cooperation.

2. Crankshaft and engine flywheel assembly comprising a device for coupling an engine flywheel (23, 33) that is coupled in rotation to a crankshaft (21, 31, 41) according to the preceding claim, **characterized in that** said end of the crankshaft (21, 31, 41) on the side of the engine flywheel (23, 33) belongs to an arm (211, 311) or to a main journal (213, 313, 413) of said crankshaft (21, 31, 41).

3. Crankshaft and engine flywheel assembly comprising a device for coupling an engine flywheel (23, 33) that is coupled in rotation to a crankshaft (21, 31, 41) according to either one of the preceding claims, **characterized in that** said end of the crankshaft (21, 31, 41) on the side of the engine flywheel (23, 33) and said joining part (214, 314, 414) partially surround one another.

4. Crankshaft and engine flywheel assembly comprising a device for coupling an engine flywheel (23, 33) that is coupled in rotation to a crankshaft (21, 31, 41) according to any one of the preceding claims, **characterized in that** first features (215, 315, 415) are positioned on a vertical surface of said joining part (214, 314, 414), said surface of the joining part being located on the side of the crankshaft (21, 31, 41) and coming into contact with said crankshaft (21, 31, 41) once the device is assembled.

5. Crankshaft and engine flywheel assembly comprising a device for coupling an engine flywheel (23, 33) that is coupled in rotation to a crankshaft (21, 31, 41) according to any one of the preceding claims, **characterized in that** second features (215, 315, 415) are positioned on a vertical surface of said crankshaft (21, 31, 41), said surface of the crankshaft (21, 31, 41) being located at the end of the crankshaft (21, 31, 41) on the side of the engine flywheel (23, 33) and coming into contact with said joining part (214, 314, 414) once the device is assembled.

6. Crankshaft and engine flywheel assembly comprising a device for coupling an engine flywheel (23, 33) that is coupled in rotation to a crankshaft (21, 31, 41) according to any one of the preceding claims, **characterized in that** the features (215, 315, 415) are radial splines perpendicular to the axis (A, AA, AAA) of said crankshaft (21, 31, 41).

7. Crankshaft and engine flywheel assembly comprising a device for coupling an engine flywheel (23, 33) that is coupled in rotation to a crankshaft (21, 31, 41) according to any one of the preceding claims, **characterized in that** the features (215, 315, 415) are created by forging, sintering or machining.

8. Crankshaft and engine flywheel assembly comprising a device for coupling an engine flywheel (23) that is coupled in rotation to a crankshaft (21) according to any one of the preceding claims, **characterized in that** said joining part (214) comprises a weight-reducing bore (217) that is able to accommodate an axial screw (218) for holding said joining part (214) on said crankshaft (21).

9. Crankshaft and engine flywheel assembly comprising a device for coupling an engine flywheel (23, 33) that is coupled in rotation to a crankshaft (21, 31, 41) according to any one of the preceding claims, **characterized in that** the joining part (213, 314, 414) and the crankshaft (21, 31, 41) are secured to one another by shrink-fitting.

10. Crankshaft and engine flywheel assembly comprising a device for coupling an engine flywheel (33) that is coupled in rotation to a crankshaft (31) according to any one of the Claims 2 to 9, **characterized in that** the rolling-element bearing (316) is positioned around the main journal (313).

11. Crankshaft and engine flywheel assembly comprising a device for coupling an engine flywheel (33) that is coupled in rotation to a crankshaft (31) according to the preceding claim, **characterized in that** the rolling-element bearing (316) is shrink-fitted axially onto the main journal (313).
